# EUROPEAN PATENT SPECIFICATION

(11) **EP 2 375 633 B1**
(45) Date of publication and mention of the grant of the patent: **23.01.2013**
(21) Application number: 10159181.6
(22) Date of filing: 07.04.2010
(51) Int. Cl.: H04L 12/18

(54) **Method of processing a service request in a multichannel network and server using the same**
Verfahren zum Bearbeiten einer Dienstanforderung in einem Netzwerk mit mehreren Kanälen und Server zur Benutzung des Verfahrens
Procédé de traitement d'une requête de service dans un reseau à canaux multiples et serveur mettant en oeuvre ce procédé

(43) Date of publication of application: 12.10.2011
(73) Proprietor: Koninklijke KPN N.V., 2516 CK The Hague (NL)
(72) Inventor: Casal Gomez, Alejandro Vincente, 2492 VX The Hague (NL)
(74) Representative: Wuyts, Koenraad Maria

(56) References cited:
- WO-A1-2008/025298
- US-A1- 2006 083 263
- US-A1- 2009 060 028
- US-B1- 7 245 614

## Description

### FIELD OF THE INVENTION

The invention relates to a method of processing a service request in a multichannel network providing a plurality of services to a plurality of user stations. The invention further relates to a computer readable medium having computer-readable instructions stored thereon for performing, when executed by a processor, such method. The invention further relates to a server for buffering a portion of multiple channels in a multichannel network, the server being arranged to perform such method. Finally, the invention relates to a multichannel network comprising such server.

### BACKGROUND OF THE INVENTION

Broadcasting networks for transmitting multiple channels are becoming increasingly complex in order to handle a greater quantity of different services. An example of such broadcasts is television transmission via Internet Protocol (IPTV). In IPTV, multicast video content, typically an MPEG-2 or MPEG-4 data stream, can be transmitted simultaneously to multiple end user stations, generally referred to as set top boxes (STBs). The end user's selection of content to view can be established by registering the address of the STB in a group to which the content is to be sent. The registration generally follows a standardized protocol, for example the Internet Group Management Protocol (IGMP).

Simultaneously, a network may be arranged to handle unicast services such as video-on-demand (VOD), to be sent to a single end user. These unicast services consume much more network bandwidth per user than the typical multicast service received by multiple users. The provision of an increasing number of channels and of both multicast and unicast services results in a more variable and less predictable load on the network. The increasing popularity of unicast services such as VOD and the introduction of new types of unicast services further exacerbate this problem.

Managing access to these channels for multiple STBs requires sophisticated resource control to ensure that sufficient bandwidth is available in the network to deliver the services requested by the end users. Previous resource control solutions only take account of a portion of the network path required to deliver a requested service, or take an excessive amount of time to determine available network capacity for delivering a requested service.

US2009/0060028 discloses a method to deliver video content is disclosed and includes sending a bandwidth change request from a set-top box device associated with a home network to a server via an Internet Protocol Television (IPTV) access network. The bandwidth change request includes a requested bandwidth change event and an upper limit overhead bandwidth factor. The method also includes receiving video packets related to the bandwidth change event from the server at an increased rate corresponding to the upper limit overhead bandwidth factor.

WO2008/025298) discloses a system that provides dynamic bandwidth sharing among a plurality of client nodes, which share network link resources in a communication network. Upon receipt of a bandwidth adjustment request from a requesting client node, the system adjusts bandwidth when network link capacity meets the bandwidth adjustment request, or when total amount of bandwidth offered to trade by any peers of the requesting client node meets the bandwidth adjustment request.

### SUMMARY OF THE INVENTION

It is an object of the present invention to address problems of managing network resources and to provide an improved method of processing service requests in a network.

For this purpose, the present invention provides a method of processing a service request according to claim 1.

In some embodiments, sending at least a portion of buffered data for the requested service comprises sending a unicast burst with a transmission rate which at least partly exceeds the transmission rate of the new channel. The identification of the transmission capacity that is required to execute the new service may take into account the additional bandwidth that is needed in view of this elevated transmission rate of the unicast burst. Sending the buffered data at an increase transmission rate enables the user station to perform a quick channel change. In particular in case of compressed video data comprising a sequence of frames of which only some frames can be used to reconstruct the video image, the user station will on average receive a reconstructible frame within a shorter time period, and reconstruction of the video signal over the new channel can be performed more quickly.

In some embodiments, the service request includes a request for reservation of a low-bandwidth equivalent of the actually requested service. This opens the possibility to provide an alternative service to a user station if the desired service is unavailable. The low-bandwidth equivalent may be provided automatically if the actually desired service is unavailable.

Several measures may be taken to improve the service level to users of the user stations if requested services are not available.

In case of a low-bandwidth equivalent of the actually requested service, a user station may be informed, for example via a service request response message, that such equivalent is available, and a user may then decide whether or not such equivalent is acceptable. The user may thus be involved in prioritization of service requests.

In some embodiments, the user station may be specifically informed that a requested service is unavailable. This would allow the user station to inform a user within a short period of time that the service is unavailable, and provides the opportunity for the user to consider a new request.

In some embodiment, the comparison indicates that the requested transmission capacity is unavailable, and the method further includes: informing the one of the plurality of user stations to await a decision; sending a message to a further user station of the plurality of user stations, the message requesting the further user station to consider terminating its current channel reception or to consider switching to a low-bandwidth equivalent of the service it is currently receiving; receiving a response message from the further user station indicating how the further station will proceed; and sending over the first path and the second part to the user station, in dependence of the content of the response of the further user station, one of at least a portion of buffered data for the requested service and/or at least a portion of the requested service, information regarding the unavailability of the new channel, and information for enabling access to a low-bandwidth equivalent of the requested new channel. These embodiments provide a method of resource conflict resolution which may enable the multichannel network to provide more services than before by improved utilization of the network capacity.

Some embodiments of the invention relate to a computer readable medium having computer-readable instructions stored thereon for performing, when executed by a processor, an embodiment of the abovementioned method. Some embodiments of the invention relate to a server for buffering a portion of multiple channels in a multichannel network, the server being capable of communicating with a set top box and a resource control unit, and being arranged to perform an embodiment of the abovementioned method. Finally, some embodiments of the invention relate to a multichannel network comprising a set top box, a resource control unit and such server.

Further aspects of the invention and embodiments as defined in the claims will be clarified with reference to the attached drawings and corresponding description. It will be understood that the invention is not in any way restricted to the embodiments disclosed in the drawings.

### DETAILED DESCRIPTION OF THE DRAWINGS

The following is a description of certain embodiments of the invention, given by way of example only and with reference to the drawings.
FIG. 1 schematically depicts a multichannel transmission system with local resource control;
FIG. 2 schematically depicts a multichannel transmission system including a buffering server;
FIG. 3 schematically depicts an example of the use of a buffering server in case of a channel change;
FIG. 4 schematically depicts a multichannel transmission system that may be used in some embodiments of the invention; and
FIG. 5 schematically depicts a call flow diagram in the system of FIG. 5.

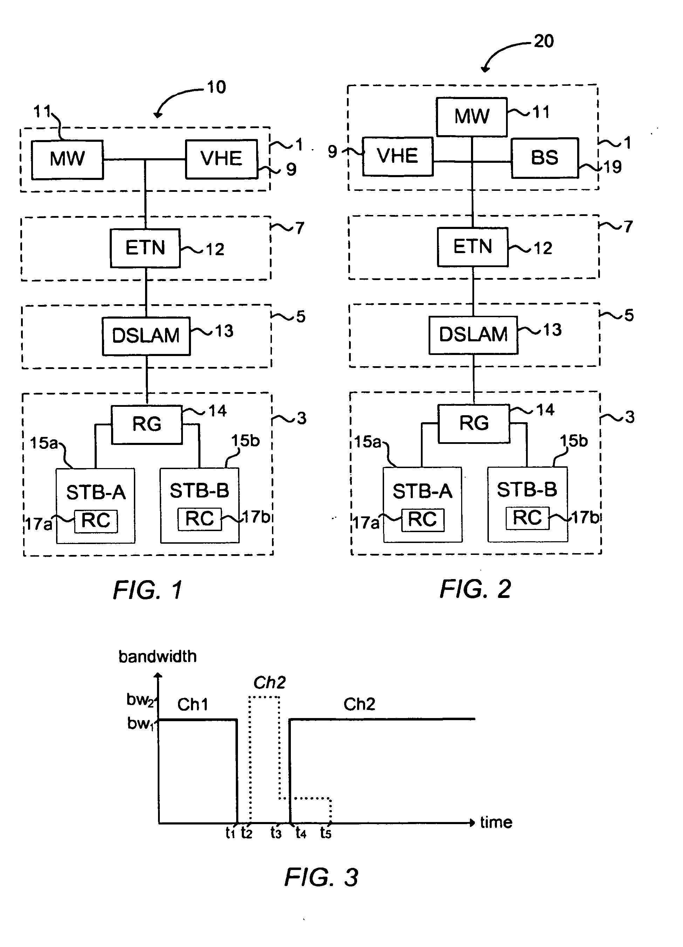

FIG. 1 schematically depicts a transmission system **10** arranged to transmit data over multiple channels, and typically comprises packet-switched network infrastructure such as IP based networks for transmission of digital data. The transmission system **10** comprises a central portion **1,** and multiple local subscriber portions **3** (only one shown to limit complexity of the drawing) communicatively coupled via an access network **5** and an aggregate network **7.**

The central portion **1,** further referred to as Central Office (CO) **1** is arranged to provide multiple channels for communication of data, such as transmitting and/or receiving television, audio-visual, video, audio, text, graphics, web pages or other types of data. The network may be arranged, for example, for sending multiple channels of data via broadcast, multicast, unicast, or other technique. The multiple channels may relate to multiple unicast services and/or one or more broadcast or multicast services. The channels may be provisioned from CO **1** by middleware (MW) **11.** In some embodiments, the MW **11** may serve as a software platform for Internet Protocol Television (IPTV), and be arranged to allocate an IP address for each channel and may also determine a transmission rate for each channel. In case of video data, the channels may originate from a Video Head-End (VHE) **9** located in the CO **1.**

The expression "unicast" relates to communication between a sender and a single receiver. A separate transmission stream is provided from source to destination for each recipient. Examples of unicast services include but are not limited to Video-on-Demand (VOD), a "start over" service (SO-service) which permits retransmission of a service from the beginning, and network personal video recorder (network PVR) enabling playback of a service recorded on the network for a user.

The expression "multicast" refers to communication between a sender and multiple receivers using one transmission stream for some portion of the transmission path, for example up to switches in the networks **5, 7** at which point data are distributed to end users on separate lines. The transmission is targeted to a specific list of nodes in the network. An example of a multicast service is IPTV. Throughout the description, some embodiments of the invention will be described with reference to an IPTV-application, although the techniques and methods of these embodiments may also be applied for other types of services.

The aggregate network **7** connects the central office to the subscriber access network and may, for example, take the form of an Ethernet Transport Network (ETN) **12.** The access network **5** may comprise a switching device for connection to individual user stations. The switching device may include a multiplexing station, for example a Digital Subscriber Line Access Multiplexer (DSLAM) **13.** In many IPTV-applications the DSLAM **13** is identified as a switch at which point data is to be distributed to user stations on separate lines.

The local subscriber portion **3** may comprise a residential gateway (RG) **14** communicatively coupled to one or more set top boxes (STB) **15a,15b** which function as one or more user stations. In FIG. 1, two STBs are shown denoted as STB-A **15a** and STB-B **15b** respectively. Hereafter, if reference is made to the function of an STB in general, the STB may be referred to as STB **15.** The one or more STBs **15a,15b** can receive instructions from a user. The RG **14** forms a gateway to the access network 5 and aggregation network 7. The RG **14** is typically arranged to communicate with the DSLAM **13** via a digital subscriber line (DSL) link, for example an asymmetric digital subscriber line (ADSL) or a very high bit rate digital subscriber line (VDSL). The connection between the DSLAM and the RG is referred to as the subscriber line, local loop or "last mile", is the connection between the user's premises and the network. In some configurations the RG **14** may be omitted or may be incorporated into the STB which communicates directly with the DSLAM

The STB **15** may select a channel by sending a request, e.g. in multicast applications in the form of an IGMP-Join command, to the DSLAM **13** via RG **14.** In response, the DSLAM **13** provides the requested channel to the RG **14** via the DSL-link. The RG **14** can see which STB **15,** e.g. STB-A **15a** or STB-B **15b** in FIG. 1, has made the request and may forward the requested channel to the respective STB **15.** If the requested channel is part of a multicast service, but due to capacity or other considerations the DSLAM **13** does not serve as a switch for that channel, the request is forwarded to the relevant switch higher up in the network, e.g. a node in ETN **12.** The data stream related to the requested channel is then routed from the switch higher up in the network to the DSLAM **13** and further forwarded to the RG **14.**

The one or more STBs **15a,15b** may include a local resource control unit (RC) **17a,17b** respectively. If more than one STB **15** is used, one of the RCs **17a,17b** may be leading. Alternatively, the RCs **17a,17b** communicate with each other without the presence of a master-slave arrangement. The RCs **17a,17b** monitor the bandwidth consumption on the DSL link. If the user requests an STB **15** to access a new service, the one or more RCs **17a,17b** verify whether the bandwidth needed to execute this service is available on the DSL link in view of the bandwidth available and the bandwidth already used for other services being provided to the user. If the one or more RCs **17a,17b** determine that the bandwidth on the DSL link required for the newly requested service is not available, the STB **15** may inform the user that the service cannot be executed and/or the service is not available. This type of local resource control may be used to avoid unnecessary requests for services from the STBs when insufficient bandwidth is available on the DSL-link, and it can also provide very quick feedback to the user in case a newly requested service cannot be provided.

The transmission system shown in Fig. 1 has a simple topology, but such systems may become much more complex to meet greater demands for more channels and particularly more unicast channels. For example, the DSLAM **13** has the capacity to provide a certain number of channels, e.g. a certain number of multicast channels and additional channels to carry unicast services. If it is desired to offer more channels than can be allocated to the DSLAM, a router may be placed behind the DSLAM higher in the network to enable additional channels to be provided through the DSLAM. As another example, to provide unicast services, multiple VOD servers may be provided, either in the CO or distributed through the network.

Because the data sent over a channel in some embodiments of the invention relates to video data, the invention will be described further by reference to a video stream, although it should be understood that other types of data may be transmitted instead or in addition to such video data. A video stream generally comprises compressed data in the form of frames. Some frames, in the case of Motion Pictures Experts Group 2 or 4 (MPEG-2 and MPEG-4 respectively) referred to as intra coded or I-frames, comprise information that enables the receiving STB to reconstruct a displayable video frame. However, most frames, in MPEG-2 or MPEG-4 referred to as P or B frames, use a relative type of encoding and cannot be used for such reconstruction in the absence of an I-frame. Accordingly, when an STB joins a video-stream that relates to a new channel, for example after a change from a first IPTV-channel to a second IPTV-channel, the STB must wait until the first reconstructible frame, in case of MPEG-2 or MPEG-4 an I-frame, is available. This may take a considerable amount of time.

To improve the channel changing time, a buffering server (BS) may be used. FIG. 2 schematically depicts a transmission system **20** that includes a BS **19.** The BS **19** is arranged to buffer portions of the multiple channels transmitted by the MW **11** or at least a selection of these channels. The portions include information that can be used to reconstruct a displayable video frame. The BS **19** may further store information regarding the location of different video streams. The information may take the form of an IP address. The IP address may be associated, particularly with respect to multicast services like IPTV, in the DSLAM **13**, but may also be located in the MW **11,** for example in case of a VOD-service. The information may be grouped in a table format, for example a program map table or a program association table. The BS **19** is further arranged to provide a unicast burst containing the above information to an STB **15** requesting a particular channel, to enable the STB **15** to quickly begin display of the newly requested channel. The unicast burst may include, for example, a complete I frame, so that a video frame can be quickly displayed and video frames can be reconstructed from incomplete frames such as a P or B frame.

Some embodiments of the invention will be explained by way of examples related to a channel change in multicast applications. In such case, the buffering server may operate as a so-called rapid channel change (RCC) server. The buffering server may however also be used for other applications, including unicast services. For example, the buffering server may be used to retransmit video portions to replace corresponding corrupted portions in VOD-applications.

FIG. 3 schematically depicts an example of the use of a buffering server in case of a channel change in the form of a graph representing bandwidth for transmission as a function of time. In this example a subscriber instructs an STB to switch from a first channel (Ch1) to a second channel (Ch2). In this example, both channels originate from a VHE in the CO.

Initially, the subscriber controlling the STB is receiving the first channel. At time *t₁*, the subscriber switches the channel to a second channel. At that time *t₁*, the STB sends a channel release request, for example an IGMP-leave request if the first channel relates to a multicast service like IPTV. In response to the channel release request, the transmission of the first channel to the STB will terminate.

At about the same time *t₁*, the STB sends a request to the buffering server BS to obtain buffered information regarding the newly desired channel, i.e. the second channel. After processing the request, the BS sends a unicast burst (represented by the dotted line) to the STB comprising information to enable the STB to quickly decode and display the second channel. To ensure that the STB receives the required information to start presenting the second channel as soon as possible to the subscriber, the transmission rate of the unicast burst generally exceeds the transmission rate used for normal transfer of the video stream of the second channel. In other words, the unicast burst consumes more bandwidth, i.e. *bw2*, than the bandwidth needed to transmit the regular video stream of the second channel, i.e. *bw1*.

After receiving the start of the unicast burst at time *t₂* the STB can begin display of the new service to the subscriber. Additionally, the STB uses the information regarding the location of the second channel to formulate and transmit a channel-join request, for example an IGMP-join request in case the second channel is an IPTV-channel. Note that an IGMP-join request may be sent independently of receiving the burst. For example, in case no burst is received after a predetermined period of time, e.g. due to unavailability of the BS, the STB may send the IGMP-join request to request a channel change in a regular way. In other words, the STB would fall back to regular channel change mode. In response to the channel-join request, the STB starts receiving the video stream related to the second channel at time *t₄*.

The STB waits before sending the IGMP-join request to avoid receiving the regular video stream related to the second channel while the unicast burst is still being transmitted at a transmission rate that exceeds the transmission rate of the regular video stream. If both the unicast burst and the regular video stream are sent simultaneously over the same DSL link, the bandwidth needed to enable such transfer, i.e. *bw1*+*bw2,* would greatly exceed the bandwidth needed to transmit the regular video stream. To ensure that the regular video stream merges smoothly with the stream being provided by the BS, the BS may be arranged to provide the last part of the unicast burst at a transmission rate much lower than the regular transmission rate. In other words, the unicast burst now consumes less bandwidth than the regular video stream and the two together do not consume more than the initial unicast burst bandwidth *bw2*. At time *t₅* the unicast burst is terminated, and the second channel is provided by the VHE alone.

The transmission systems **10, 20** as shown in FIGS. 1,2 respectively, have the drawback that the RCs **17a,17b** base their control on information about the available bandwidth on the local DSL-link and not about possible bottlenecks higher up in the transmission network, e.g. bottlenecks within ETN **12** or other parts of the network in and above the DSLAM **13.** Another drawback of the transmission systems **10, 20** is that they may rely on communication among the RCs **17** located in the STBs. In such cases, the RG **14** has to operate in a mode which enables the STBs **15a,15b** to 'see' each other. This mode of operation may be referred to as routed mode. This routed mode of operation generally requires much more processing power in the RG **14** than a mode where each STB has a direct connection with the CO **1,** generally referred to as bridged mode. Routed mode is not supported in many deployed RGs, meaning that the systems in **10, 20** will not work in many real situations.

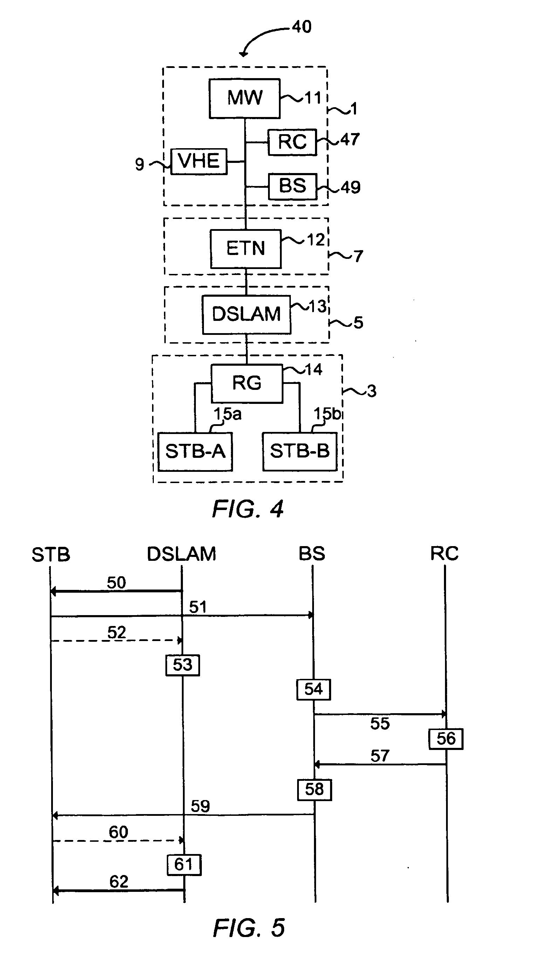

FIG. 4 schematically depicts a transmission system **40** that may be used in some embodiments of the invention. The central office **1** comprises a central resource control unit (RC) **47** and a buffering server (BS) **49.** The RC **47** and the BS **49** may either be separate physical modules or may be combined in a single module. The RC **47** is arranged to monitor resource availability within a part of or the entire transmission system **40** based on knowledge of the topology of the system and the services provided therein. As a result, the RC **47** may be aware of bottlenecks throughout the entire transmission system **40,** not just the DSL-link, and it can thus better identify whether a request for a new or different service can be fulfilled or not without overloading the network.

Central resource control, of the kind provided by RC **47** in the system of Fig. 4, has in the past been considered too slow for implementation in these types of applications. RC **47** is located much higher in the network than, for example, RCs **17a,17b** shown in Fig. 1 and 2. RCs **17a,17b** can provide a quick response to a user's request for a new service such as a channel change so that the user receives immediate feedback whether her request can be fulfilled. However, with central resource control there is an inevitable delay in sending a new service request through the network from any one of the STBs **15a,15b** to RC **47,** processing the request, and sending a response back from RC **47** to the respective STB **15a, 15b.** This delay can be annoying to end-users and has resulted in network operators avoiding the use of such central resource control for many applications.

However, the system of Fig. 4 combines the use of central resource control and channel buffering in a way that alleviates this problem and provides more sophisticated network resource control without introducing excessive delay. An embodiment of a method of processing a service request related to a channel change in the multichannel transmission system **40** of FIG. 4 is described with reference to FIG. 5.

To illustrate the operation of the system, consider the situation that a subscriber wants to switch from a first channel to a second channel. Both channels are IPTV-channels being part of a multicast transmission arrangement. Additionally, both channels are available at the DSLAM **13.** FIG. 5 schematically depicts a call flow diagram of such request in the system of FIG. 4 in accordance with some embodiments of the invention. In this call flow diagram, no distinction has been made between STB-A **15a** and STB-B **15b.** The set top box is simply referred to as STB **15.**

Initially, the STB **15** is receiving the first channel, schematically depicted by the thick arrow in action **50.** When the subscriber instructs the STB **15** to perform a channel change, the STB performs two actions. Firstly, in action **51,** the STB **15** sends a channel change request to the BS **49.** Secondly, in action **52,** the STB **15** sends an IGMP-leave command (schematically depicted by the dashed arrow) to the DSLAM **13.** Steps **51** and **52** may also take place in swapped order.

In response to the IGMP-leave command, the DSLAM **13** may terminate the transmission of the first channel to the STB **15** in action **53** for a multicast service. This exemplary embodiment explains the operation of a channel change with respect to multicast channels. Other embodiments may involve unicast channels. In such embodiments, termination of a unicast service by the STB **15** may be executed by sending a RTSP Teardown request to the CO, in particular to the VHE.

The BS **49** forms a resource reservation request in action **54** and sends this request to the RC **47** in action **55.** Formation of the resource reservation request involves establishing the bandwidth needed to execute the requested channel change within a certain period of time. Preferably, the BS **49** uses information regarding the bandwidth requirements of the new channel. For this reason, the BS **49** may be provisioned with such information. This provisioning is preferably done periodically such that bandwidth variations are sufficiently accommodated. Alternatively, the STB **15** may send bandwidth requirement information along with the channel change request in action **51.** In some embodiments a communication link between the STB **15** and the BS **49** may be established for this purpose, or facilities included in the network for accommodating this communication. Additionally, or alternatively, the STB **15** may indicate whether the resource reservation request should comprise an additional request for reservation of capacity for a lower bitrate equivalent, for example a low-resolution version of the requested service, in case there is insufficient bandwidth available for the requested service.

As discussed with reference to FIG. 3, the BS **49** preferably sends a first portion of the unicast burst with a transmission rate that exceeds the transmission rate of the regular channel provided by the VHE **9.** For example, the first portion of the unicast burst may be sent with a bandwidth of 120% the regular bandwidth. The resource reservation request may take such elevated transmission rate into account by requesting resources for 120% of the regular bandwidth needed.

Optionally, the resource reservation request may comprise information regarding the period for which a certain bandwidth is requested. For example, the resource reservation request may ask for a certain bandwidth corresponding with the bandwidth needed to obtain the new channel, and furthermore ask for additional bandwidth for a short period of time to accommodate a burst from BS **49.** Alternatively, the BS **49** may first ask for the total bandwidth, i.e. the regular bandwidth of the second channel and the additional bandwidth needed for the first portion of the unicast burst, and subsequently send an additional request regarding the regular bandwidth.

In action **56** the RC **47** examines the resource reservation request sent in action 55. The RC **47** verifies whether the resource can be reserved in view of the topology of the transmission system **40** and the services that are used therein. For example, this may include assessing for multiple segments of the transmission path from the origin in the CO **1,** for example MW **11** or VHE **9,** and BS **49** to STB **15** the design bandwidth and currently used or committed bandwidth to derive the bandwidth currently available. In the system shown in Fig. 4, this assessment for example be made for the CO **1,** the ETN **7,** the DSLAM **13,** and DSL link between the DSLAM and the RG **14.** Although a relatively simple network topology is illustrated in Fig. 4, networks designed to provide a large variety of multicast and unicast channels and services may a more complex topology, for example with routers above the DSLAMs to increase the number of channels provided to the DSLAM, distributed VOD servers, and many other additional network elements and transmission paths.

In action **57** the RC **47** sends a resource reservation response to the BS **49.** If the requested bandwidth is available, the resource reservation response acknowledges the request. If the requested bandwidth is unavailable, the resource reservation response will be negative. The resource reservation response may take the form of an ACK/NACK response message as will be understood by a person skilled in the art. In case the resource reservation request did comprise a reservation with respect to a low-bitrate equivalent of the requested service in view of an instruction thereto, e.g. sent with the channel change request in action **51,** the negative resource reservation response message sent may trigger the BS **49** to provide information to the STB **15** for access to the location of this low-bitrate equivalent.

The BS **49** then examines the resource reservation response in action **58.** Upon receiving a positive resource reservation response, the BS **49** will send a unicast burst to the STB **15** in action **59.** The unicast burst may comprise a buffered portion of the video stream corresponding to the second channel.

The STB **15** then sends an IGMP-join request (dashed line) to the DSLAM **13** in action **60.** As discussed with reference to FIG. 3, the unicast burst may further comprise information related to the location of the requested second channel in the DSLAM **13.** This information may be used by the STB **15** in the IGMP-join request to enable the DSLAM **13** to supply the desired video stream. In response to the IGMP-join request, the DSLAM **13** registers the STB **15** with respect to the second channel in action **61** and allows the video stream corresponding with the second channel to flow towards the STB **15,** schematically shown with thick arrow **62.**

The STB **15** now preferably merges the data obtained via the unicast burst in action **59** with the video stream obtained from the DSLAM **13** in action **62** such that the STB provides an uninterrupted view of the second channel to the subscriber. For this reason, sending the IGMP-join request may be delayed such that the video stream arrives at the STB **15** at a suitable time, for example when the bandwidth occupied by the unicast burst of the BS **49** is lowered or about to be lowered.

Upon receiving a negative resource reservation response in action **57,** the BS **49** may take different actions after examination of the response in action **58.** Firstly, the BS **49** may determine the availability of transmission capacity to execute the service request with a unicast burst having a reduced maximum transmission rate. For this purpose, the BS **49** may request a further resource reservation request with a requested bandwidth lower than the bandwidth requested earlier. If this resource reservation request receives a positive response, the unicast burst may have a different format, but may still be sent. For example, a first part of the burst may be sent with 110% of the transmission rate of the regular video stream instead of 120%, and a second part may be sent with 10% of the regular transmission rate instead of 20%, or the entire burst may be sent at 100%. In one embodiment, a dialogue between the BS **49** and the RC **47** is possible to define the optimal settings.

Secondly, in particular if no more bandwidth can be requested than the bandwidth already in use for the first channel, and the second channel will occupy a similar bandwidth, the BS **49** may not send a unicast burst in action **59,** but may send a message to the STB **15** telling it to send the IGMP-join request immediately without waiting for a burst from BS 49.

Another course of action may be taken if no more bandwidth can be requested than the bandwidth already in use for the first channel, while the second channel occupies more bandwidth, for example due to a higher resolution. In such case, the BS **49** may inform the STB **15** in action **59** that the second channel is not available, which message may be forwarded to the subscriber. The BS **49** may additionally inform the STB **15** that bandwidth has been reserved for a low-bitrate version of the channel if both bandwidth and low-bitrate equivalent are present. Details to join this channel may also be sent to the STB **15.**

A non-availability message may also be sent if, while asking for a channel change, a different service is requested as well. In such situation, the RC **47** may decide that the channel change request is lower in priority than the other service request it received, and the channel change request may not be acknowledged. The RC **47** may thus prioritize requests. Prioritization may be based on predetermined rules set for all available services. Alternatively, the rules may be set for each subscriber and provisioned into the RC **47** or readily available to it, for example by sending the rules along with the channel change request in action **51.** For example, it may be decided that for a certain subscriber a service request related to retransmission of corrupt packets in a unicast data stream like a VOD video stream has more priority than a channel change request that allows for a rapid channel change. The respective subscriber may consider impairment of the quality of the VOD-service unacceptable, while slow channel changing is merely considered to be annoying.

As mentioned above, it may be possible that the data stream of the second channel occupies more bandwidth than the data stream of the first channel. For example, the first channel may correspond to a regular IPTV-channel, while the second channel is an IPTV-channel with improved resolution like a high definition television channel. Another example would be a situation where the first channel is a regular IPTV-channel sent via a multicast arrangement, while the second channel relates to a different type of service, for example a service like VOD that is sent via a unicast arrangement.

In these situations, as discussed with reference to FIGS. 4 and 5, the RC **47** may not acknowledge a channel change. The BS **49** then sends a message to the STB **15** that the channel change request cannot be executed. The STB **15** may then decide, for example by using one or more local resource control units like RCs **17** in FIGS. 1, 2 how to deal with the negative response. A combined use of local resource control units like RCs **17** and a central RC like RC **47** allows for a flexible reservation of resources, for example by taking hierarchical choices of subscribers into account.

The STB **15** may provide information to the subscriber that the new channel is not available. In addition, the subscriber may have the opportunity to respond. For example, the STB **15** may provide a series of options how to cope with the non-availability of the newly desired channel.

Firstly, the STB **15** may offer the subscriber a notification option. Upon selection of this option, a notification may be presented to the subscriber when the newly desired channel is available. To provide such notification, the STB **15** can either periodically send a channel change request to the BS **49** and wait until an acknowledgement is received. Alternatively, the STB **15** can send a request to the BS **49** and/or the RC **47** to periodically check the availability of the newly desired channel, and send a notification in case such availability arises. When the STB **15** receives a signal indicating that the newly desired channel is available, the STB **15** presents this information to the subscriber via a notification.

Sending a notification towards the subscriber may be coupled with making a bandwidth reservation for a predetermined period of time. The bandwidth reservation allows for changing to the newly desired channel without another service request occupying that bandwidth while the notification is being processed and the subscriber considers whether the a switch to the reserved channel is still desired.

Instead of asking for a notification, the subscriber may be given the option to rearrange the services being provided to him so far, such that additional bandwidth becomes available. For example, consider the situation in which a subscriber household has three STBs **15.** A first STB provides an IPTV-channel. A second STB provides a VOD unicast stream. Finally, a third STB provides a unicast stream related to an SO-service. If the subscriber sends a request for a channel change from the presently presented IPTV-channel to an IPTV-channel occupying more bandwidth, e.g. due to a higher resolution of the images, the STBs may receive a response indicating that the desired new channel is not available. However, local resource control units like RCs **17** in FIGS. 1, 2, or a central (or "back-end") resource control like RC **47** in FIG 4, may then indicate that an alternative choice of services may lead to availability of the desired new channel. The STBs may then provide the subscriber with a menu of options for further handling. A first option might be not to switch to the new channel. A second option might be to terminate the VOD service, while a third option could be to terminate the SO-service. If the second option is chosen, the STBs will arrange termination of the VOD-service, and again send a channel change request to the BS **49** to enable switching to the IPTV-channel with enhanced resolution.

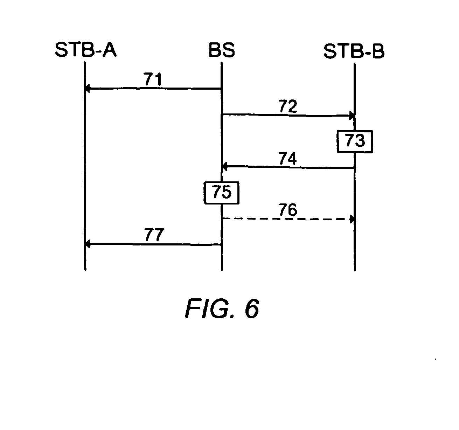

FIG. 6 schematically depicts an exemplary flow diagram of a method of resource conflict settlement in the multi-channel transmission system of FIG. 4. At the start of the flow the situation is as follows. STB-A **15a** got a negative response to a channel change request. The change cannot be performed as there is insufficient bandwidth available to accommodate the new channel. Furthermore, there is no low-bandwidth equivalent of the requested new channel. STB-B **15b** is receiving a service provided via another channel.

In this situation after evaluation of the negative resource request response in action **58** the BS **49** may send a signal to STB-A **15a** with a waiting status in action **71.** The "waiting status"-signal informs the STB-A **15a** that the channel change request is still being considered and a decision on its outcome is to be expected.

The BS **49** also sends a message to STB-B **15b** containing a request to consider either one of stopping reception of the currently presented channel, and switching to a low-bandwidth equivalent of the currently presented channel, if available, in action **72.** The message may further contain information regarding the service requested by STB-A **15a.** Although action **72** has been depicted as an action which follows action **71,** both actions **71**, **72** may be performed simultaneously or in a reversed order.

In action **73,** the STB-B **15b** decides how to respond to the request sent in action **72**. A response message is then sent to the BS **49** in action **74.** The response message indicates how the STB-B **15b** will proceed, i.e. whether it will continue with receiving the current channel, change to a channel with a lower bandwidth or terminate the channel reception.

The decision made by STB-B **15b** in action **73** may be based on the type of service it is currently receiving and/or (pre)programmed instructions. The decision for a Video-on-Demand channel or an IPTV channel may be different. (Pre)programmed instructions may be provisioned in the MW, and may relate to priorities of different types of recordings. For example, ongoing recording may have a higher priority than new recordings. Another instruction might be to never interrupt an ongoing stream, but only allow termination of a procedure if a stream has not yet been provided.

Additionally, or alternatively, in case the request comprises information regarding the requested service of STB-A **15a,** the decision may be based on (pre)programmed or stored service priority settings. If the service provided via the channel received by STB-B **15b** has a higher priority than the service requested by STB-A **15a,** the decision of STB-B **15b** may then be to continue with reception of the channel, and the response in action **74** will be negative in that STB-B **15b** will not provide change its performance such that bandwidth becomes available for STB-A **15a** to receive the requested channel. On the other hand, if the service offered to STB-B **15b** is of a lower priority than the service requested by STB-A **15a,** the response in action **74** may be positive in that STB-B **15b** decided to terminate the channel reception. If a low-bandwidth equivalent of the service provided to STB-B **15b** is available, and a switch to this low-bandwidth equivalent would provide sufficient bandwidth to accommodate the channel requested by STB-B **15a,** STB-B **15b** may decide to switch to the low-bandwidth equivalent and inform BS **49** about this decision in action **74.**

The BS **49** evaluates the response of the STB-B **15b** in action **75** and then sends a signal to the STB-A **15a** in action **77,** the signal either being a unicast burst or a signal comprising information regarding the channel change request as discussed earlier with reference to action **59.**

If the STB-B **15b** has decided to switch to a low-bandwidth equivalent of the service it is currently receiving, the BS **49** may send details regarding the location of this low-bandwidth equivalent channel to the STB-B **15b** as discussed earlier in action **76.**

Note that the actions performed by the BS **49** in the flow diagram of FIG. 6 may also be performed by the RC **47.**

Settling a resource conflict in a way as shown in FIG. 6 provides an improved utilization of available resources. Furthermore, it allows for improved flexibility in the offering of services.

In an alternative method of settling this resource conflict, the RC **47** may be requested to make the decision whether or not the stream provided to STB-B **15b** should be terminated, downgraded or continued. This could be done by using predetermined priority settings. For example, the decision what to do with the channel provided to STB-B **15b** could be based on the type of service requested by STB-A **15a** and the type of service currently being presented to STB-B **15b.**

Some embodiments of a method of processing a service request may be stored on a computer readable medium having computer-readable instructions stored thereon, for example in the form of a computer program product. The computer readable instructions on the computer readable medium can be loaded onto the BS **49,** and may then perform, when executed by a processor in the BS **49,** these embodiments. Examples of a computer readable medium include, but are not limited to floppy disks, CD ROM's, DVD's, portable Universal Serial Bus (USB) devices and portable memory card devices.

Although embodiments of the invention have been described with reference to a channel change, it must be understood that embodiments of the invention may also be used to process a different type of service request. Furthermore, the term "channel change" should not be interpreted as being limited to a change of channels within a multicast transmission system like an IPTV-system. The expression "channel change" may also relate to a different type of change, for example a change from a multicast IPTV-channel to a unicast VOD-channel, or between any two services provided by the network. Note that in case of a unicast channel, a channel release request or a channel join request will generally be sent to the MW **11** instead of the DSLAM **13** as will be known to a person skilled in the art.

Although embodiments of the invention have been described with reference to a unicast burst having two different transmission rates, it must be understood that different types of unicast bursts may be used as well. The unicast burst may be provided at a single transmission rate, or its content may be spread in more than two portions, each portion having its own transmission rate.

The invention has been described by reference to certain embodiments discussed above. It will be recognized that these embodiments are susceptible to various modifications and alternative forms well known to those of skill in the art. Further modifications in addition to those described above may be made to the structures and techniques described herein without departing from the spirit and scope of the invention. Accordingly, although specific embodiments have been described, these are examples only and are not limiting upon the scope of the invention.

### Abbreviations

- ADSL: Asymmetric Digital Subscriber Line
- BS: Buffering Server
- CD-ROM: Compact Disk Read-Only Memory
- DSL: Digital Subscriber Line
- DSLAM: Digital Subscriber Line Access Multiplexer
- DVD: Digital Video Disk
- ETN: Ethernet Transport Network
- IGMP: Internet Group Management Protocol
- IPTV: Internet Protocol Television
- MW: Middleware
- RC: Resource Control unit
- RCC: Rapid Channel Change
- RG: Residential Gateway
- SO-service: Start over service
- STB: Set Top Box
- USB: Universal Serial Bus
- VDSL: Very high bit rate Digital Subscriber Line
- VHE: Video Head-End
- VOD: Video On Demand

## Claims

1. Method of processing a service request in a multichannel network (40) providing a plurality of services to a plurality of user stations (3), the network comprising at least one services station (9,11), at least one buffering server (49), and at least one multiplexing station (13) connected to a plurality of the plurality of user stations, wherein the services are provided from at least one of the services stations to the user stations via a first path between the at least one services station and the at least one multiplexing station, and a second path between the at least one multiplexing station and one of the plurality of user stations, the method comprising:
- buffering data for one or more of the services provided by the network in the at least one buffering server;
- receiving a service request from one of the plurality of user stations requesting a new service, the service request comprising a request for reservation of a low-bandwidth equivalent of the service in case the requested new service is unavailable;
- examining the service request and identifying transmission capacity required to execute the new service;
- determining availability of transmission capacity over the first path and the second path;
- comparing the identified required transmission capacity with the determined available transmission capacity;
- if the comparison indicates sufficient available transmission capacity, sending to the user station over the first path and the second path, at least a portion of buffered data for the requested service and/or at least a portion of the requested service; and wherein
- if the comparison indicates that the requested transmission capacity is unavailable evaluating whether the transmission capacity would be available for the low-bandwidth equivalent service, and sending to the user station over the first path and the second path, at least a portion of buffered data for the low-bandwidth equivalent of the requested service and/or at least a portion thereof.

2. Method of claim 1, wherein the service request relates to changing from a present channel to a new channel.

3. Method of claim 2, wherein the service request comprises information regarding the bandwidth of the new channel.

4. Method of claim 2, wherein the method further comprises provisioning bandwidth information of channels to be buffered by the at least one buffering server.

5. Method of any one of claims 2-4, wherein sending at least a portion of buffered data for the requested service comprises sending a unicast burst with a transmission rate which at least partly exceeds the transmission rate of the new channel, and wherein identifying transmission capacity required to execute the new service takes into account additional bandwidth needed in view of the transmission rate of the unicast burst.

6. Method of claim 5 further including, if the comparison indicates insufficient available transmission capacity, determining availability of transmission capacity to execute the service request with a unicast burst having a reduced maximum transmission rate.

7. Method of claim 6, comprising in case the determining indicates that there is insufficient transmission capacity for the unicast burst, sending a response to the one of the plurality of user stations for triggering a request for access to the requested service without unicast burst.

8. Method of any one of claims 1-5, wherein the comparison indicates that the requested transmission capacity is unavailable, and wherein the method further includes informing the one of the plurality of user stations that the new channel is unavailable.

9. Method of any one of claims 1-5, wherein the comparison indicates that the requested transmission capacity is unavailable, and wherein the method further includes providing information to the one of the plurality of user stations for enabling access to a low-bandwidth equivalent of the requested new service.

10. Method of any one of claims 1-5, wherein the comparison indicates that the requested transmission capacity is unavailable, and wherein the method further includes:
- informing the one of the plurality of user stations to await a decision;
- sending a message to a further user station of the plurality of user stations, the message requesting the further user station to consider terminating its current channel reception or to consider switching to a low-bandwidth equivalent of the service it is currently receiving;
- receiving a response message from the further user station indicating how the further user station will proceed; and
- sending over the first path and the second path to the user station, in dependence of the content of the response of the further user station, one of at least a portion of buffered data for the requested service and/or at least a portion of the requested service, information regarding the unavailability of the new channel, and information for enabling access to a low-bandwidth equivalent of the requested new channel.

11. Computer readable medium having computer-readable instructions stored thereon for performing, when executed by a processor, the method as defined by any one of claims 1 - 10.

12. Server (49) for buffering a portion of multiple channels in a multichannel network (40), the server being capable of communicating with a set top box (15) and a resource control unit (47) and being arranged to perform the method as defined by any one of claims 1 - 10.

13. Multichannel network comprising:
- a set top box (15);
- a resource control unit (47); and
- a server (49) as defined by claim 12.

## Patentansprüche

1. Verfahren des Verarbeitens einer Diensteanforderung in einem Mehrkanalnetz (40), wobei mehrere Dienste mehreren Benutzerstationen (3) bereitgestellt werden, wobei das Netz mindestens eine Dienstestation (9, 11), mindestens einen Pufferserver (49) und mindestens eine Multiplexstation (13) aufweist, die mit mehreren der mehreren Benutzerstationen verbunden ist, wobei die Dienste von mindestens einer der Dienstestationen den Benutzerstationen über einen ersten Weg zwischen der mindestens einen Dienstestation und der mindestens einen Multiplexstation und einen zweiten Weg zwischen der mindestens einen Multiplexstation und einer der mehreren Benutzerstationen bereitgestellt werden, wobei das Verfahren Folgendes aufweist:
- Puffern von Daten für einen oder mehrere der durch das Netz bereitgestellten Dienste in dem mindestens einen Pufferserver;
- Empfangen einer Diensteanforderung von einer der mehreren Benutzerstationen, wobei ein neuer Dienst angefordert wird, wobei die Diensteanforderung eine Anforderung zur Reservierung eines Äquivalents geringer Bandbreite des Dienstes für den Fall aufweist, dass der angeforderte neue Dienst nicht verfügbar ist;
- Überprüfen der Diensteanforderung und Identifizieren der Übertragungskapazität, die erforderlich ist, um den neuen Dienst auszuführen;
- Ermitteln der Verfügbarkeit von Übertragungskapazität über den ersten Weg und den zweiten Weg;
- Vergleichen der identifizierten erforderlichen Übertragungskapazität mit der ermittelten verfügbaren Übertragungskapazität;
- falls der Vergleich ausreichende verfügbare Übertragungskapazität anzeigt, Senden mindestens eines Anteils gepufferter Daten für den angeforderten Dienst und/oder mindestens eines Anteils des angeforderten Dienstes über den ersten Weg und den zweiten Weg an die Benutzerstation; und wobei
- wenn der Vergleich anzeigt, dass die angeforderte Übertragungskapazität nicht verfügbar ist, Beurteilen, ob die Übertragungskapazität für den äquivalenten Dienst geringer Bandbreite verfügbar wäre, Senden mindestens eines Anteils gepufferter Daten für das Äquivalent geringer Bandbreite des angeforderten Dienstes und/oder mindestens eines Anteils davon über den ersten Weg und den zweiten Weg an die Benutzerstation.

2. Verfahren nach Anspruch 1, wobei sich die Diensteanforderung auf Wechseln von einem gegenwärtigen Kanal auf einen neuen Kanal bezieht.

3. Verfahren nach Anspruch 2, wobei die Diensteanforderung Informationen bezüglich der Bandbreite des neuen Kanals aufweist.

4. Verfahren nach Anspruch 2, wobei das Verfahren ferner Vorhalten von Bandbreiteninformationen von Kanälen aufweist, die durch den mindestens einen Pufferserver zu puffern sind.

5. Verfahren nach einem der Ansprüche 2-4, wobei Senden mindestens eines Anteils gepufferter Daten für den angeforderten Dienst Senden eines Einfachsendungsbursts mit einer Übertragungsrate aufweist, die mindestens teilweise die Übertragungsrate des neuen Kanals überschreitet, und wobei Identifizieren von Übertragungskapazität, die erforderlich ist, um den neuen Dienst auszuführen, zusätzliche Bandbreite berücksichtigt, die angesichts der Übertragungsrate des Einfachsendungsbursts benötigt wird.

6. Verfahren nach Anspruch 5, das ferner, falls der Vergleich unzureichende verfügbare Übertragungskapazität anzeigt, Ermitteln der Verfügbarkeit von Übertragungskapazität zum Ausführen die Diensteanforderung mit einem Einfachsendungsburst aufweist, der eine verringerte maximale Übertragungsrate aufweist.

7. Verfahren nach Anspruch 6, wobei in dem Fall, dass das Ermitteln anzeigt, dass es unzureichende Übertragungskapazität für den Einfachsendungsburst gibt, eine Antwort an die eine der mehreren Benutzerstationen zum Auslösen einer Anforderung um Zugang zum angeforderten Dienst ohne Einfachsendungsburst gesendet wird.

8. Verfahren nach einem der Ansprüche 1-5, wobei der Vergleich anzeigt, dass die angeforderte Übertragungskapazität nicht verfügbar ist, und wobei das Verfahren ferner Informieren der einen der mehreren Benutzerstation aufweist, dass der neue Kanal nicht verfügbar ist.

9. Verfahren nach einem der Ansprüche 1-5, wobei der Vergleich anzeigt, dass die angeforderte Übertragungskapazität nicht verfügbar ist, und wobei das Verfahren ferner Bereitstellen von Informationen für die eine der mehreren Benutzerstation zum Ermöglichen von Zugang zu einem Äquivalent geringer Bandbreite des angeforderten neuen Dienstes aufweist.

10. Verfahren nach einem der Ansprüche 1-5, wobei der Vergleich anzeigt, dass die angeforderte Übertragungskapazität nicht verfügbar ist, und wobei das Verfahren ferner aufweist:
- Informieren der einen der mehreren Benutzerstationen, eine Entscheidung abzuwarten;
- Senden einer Mitteilung an eine weitere Benutzerstation der mehreren Benutzerstationen, wobei die Mitteilung die weitere Benutzerstation auffordert, Beenden ihres aktuellen Kanalempfangs zu erwägen oder Umschalten auf ein Äquivalent geringer Bandbreite des Dienstes zu erwägen, den sie aktuell empfängt;
- Empfangen einer Antwortmitteilung von der weiteren Benutzerstation, die anzeigt, wie die weitere Benutzerstation fortfahren wird; und
- Senden über den ersten Weg und den zweiten Weg an die Benutzerstation, in Abhängigkeit vom Inhalt der Antwort der weiteren Benutzerstation, eines von mindestens einem Anteil gepufferter Daten für den angeforderten Dienst und/oder mindestens einem Anteil des angeforderten Dienstes, Informationen bezüglich der Nichtverfügbarkeit des neuen Kanals und Informationen zum Ermöglichen von Zugang zu einem Äquivalent geringer Bandbreite des angeforderten neuen Kanals.

11. Computerlesbares Medium, das computerlesbare Befehle aufweist, die darauf gespeichert sind, zum Durchführen, bei Ausführung durch einen Prozessor, des Verfahrens, wie durch einen der Ansprüche 1-10 definiert.

12. Server (49) zum Puffern eines Anteils mehrerer Kanäle in einem Mehrkanalnetz (40), wobei der Server fähig ist, mit einem Beistellgerät (15) und einer Ressourcensteuereinheit (47) zu kommunizieren, und dazu ausgelegt ist, das Verfahren, wie durch einen der Ansprüche 1-10 definiert, auszuführen.

13. Mehrkanalnetz, das Folgendes aufweist:
- ein Beistellgerät (15);
- eine Ressourcensteuereinheit (47) und
- einen Server (49), wie durch Anspruch 12 definiert.

## Revendications

1. Procédé de traitement d'une demande de service dans un réseau à canaux multiples (40) fournissant une pluralité de services à une pluralité de stations d'utilisateur (3), le réseau comprenant au moins une station de services (9, 11), au moins un serveur de mise en mémoire tampon (49), et au moins une station de multiplexage (13) connectée à une pluralité de la pluralité de stations d'utilisateur, où les services sont fournis par au moins une des stations de services aux stations d'utilisateur via une première voie entre la au moins une station de services et la au moins une station de multiplexage, et une seconde voie entre la au moins une station de multiplexage et une de la pluralité de stations d'utilisateur, le procédé comprenant :
mettre des données en mémoire tampon pour un ou plusieurs des services fournis par le réseau dans l'au moins un serveur de mise en mémoire tampon ;
recevoir une demande de service de l'une de la pluralité de stations d'utilisateur demandant un nouveau service, la demande de service comprenant une demande pour la réservation d'un équivalent à faible bande passante du service dans le cas où le nouveau service demandé serait indisponible ;
examiner la demande de service et identifier la capacité de transmission requise pour exécuter le nouveau service ;
comparer la capacité de transmission requise identifiée à la capacité de transmission disponible déterminée ;
si la comparaison indique une capacité de transmission disponible suffisante, envoyer à la station d'utilisateur, sur la première voie et la seconde voie, au moins une partie des données en mémoire tampon pour le service demandé et/ou au moins une partie du service demandé ; et où
si la comparaison indique que la capacité de transmission demandée est indisponible, évaluer si la capacité de transmission serait disponible pour le service équivalent à faible bande passante, et envoyer à la station d'utilisateur, sur la première voie et la seconde voie, au moins une partie des donnés en mémoire tampon pour l'équivalent à faible bande passante du service demandé et/ou au moins une partie de celui-ci.

2. Procédé selon la revendication 1, dans lequel la demande de service concerne le changement d'un canal actuel pour un autre canal.

3. Procédé selon la revendication 2, dans lequel la demande de service comprend des informations relatives à la bande passante du nouveau canal.

4. Procédé selon la revendication 2, dans lequel le procédé comprend en outre de fournir des informations de bande passante relatives aux canaux à mettre en mémoire tampon par l'au moins un serveur de mise en mémoire tampon.

5. Procédé selon l'une quelconque des revendications 2 à 4, dans lequel l'envoi d'au moins une partie des données mises en mémoire tampon pour le service demandé comprend d'envoyer une salve monodiffusion avec un débit de transmission qui dépasse au moins partiellement le débit de transmission du nouveau canal, et où l'identification de la capacité de transmission requise pour exécuter le nouveau service prend en compte une bande passante supplémentaire nécessaire au regard du débit de transmission de la salve monodiffusion.

6. Procédé selon la revendication 5, comprenant en outre, si la comparaison indique une capacité de transmission disponible insuffisante, de déterminer la disponibilité d'une capacité de transmission pour exécuter la demande de service avec une salve monodiffusion ayant un débit de transmission maximum réduit.

7. Procédé selon la revendication 6, comprenant, au cas où la détermination indique que la capacité de transmission est insuffisante pour une salve monodiffusion, d'envoyer une réponse à une station de la pluralité de stations d'utilisateur pour déclencher une demande d'accès au service demandé sans salve monodiffusion.

8. Procédé selon l'une quelconque des revendications 1 à 5, dans lequel la comparaison indique que la capacité de transmission demandée est indisponible, et dans lequel le procédé comprend en outre d'informer la station de la pluralité de stations d'utilisateur que le nouveau canal est indisponible.

9. Procédé selon l'une quelconque des revendications 1 à 5, dans lequel la comparaison indique que la capacité de transmission demandée est indisponible, et dans lequel le procédé comprend en outre de fournir des informations à la station de la pluralité de stations d'utilisateur pour permettre d'accès à un équivalent à faible bande passante du nouveau service demandé.

10. Procédé selon l'une quelconque des revendications 1 à 5, dans lequel la comparaison indique que la capacité de transmission demandée est indisponible, et dans lequel le procédé comprend en outre :
informer la station de la pluralité de stations d'utilisateur d'attendre une décision ;
envoyer un message à une autre station d'utilisateur de la pluralité de stations d'utilisateur, le message demandant à l'autre station d'utilisateur de considérer de clore sa réception de canal en cours ou de considérer de commuter vers un équivalent à faible bande passante du service qu'elle est en train de recevoir ;
recevoir un message de réponse de l'autre station d'utilisateur indiquant comment l'autre station d'utilisateur va poursuivre ; et
envoyer sur la première voie et la seconde voie, en fonction du contenu de la réponse de l'autre station d'utilisateur, des données d'au moins une partie des donnés en mémoire tampon pour le service demandé et/ou au moins une partie du service demandé, des informations concernant l'indisponibilité du nouveau canal, et des informations pour permettre l'accès à un équivalent à faible bande passante du nouveau canal demandé.

11. Support lisible par un ordinateur sur lequel sont stockées des instructions lisibles par un ordinateur pour exécuter, lorsqu'elles sont exécutées par un processeur, le procédé tel que défini par l'une quelconque des revendications 1 à 10.

12. Serveur (49) pour mettre en mémoire tampon une partie de plusieurs canaux dans un réseau à canaux multiples (40), le serveur pouvant communiquer avec un décodeur (15) et une unité de contrôle des ressources (47) et étant conçu pour exécuter le procédé tel que défini par l'une quelconque des revendications 1 à 10.

13. Réseau à canaux multiples comprenant :
un décodeur (15) ;
une unité de contrôle des ressources (47) ;
un serveur (49) tel que défini par la revendication 12.
